# EUROPÄISCHE PATENTSCHRIFT

(11) **EP 4 042 909 B1**
(45) Veröffentlichungstag und Bekanntmachung des Hinweises auf die Patenterteilung: **18.06.2025**
(21) Anmeldenummer: 22152055.4
(22) Anmeldetag: 18.01.2022
(51) Int. Cl.: A47J 27/00, A47J 36/02, A47J 41/00, H05B 6/12

(54) **KÜCHENUTENSIL ZUM AUFSTELLEN AUF EIN INDUKTIONSKOCHFELD**
KITCHEN UTENSIL FOR PLACING ON AN INDUCTION HOB
USTENSILE DE CUISINE DESTINÉ À ÊTRE POSÉ SUR UNE PLAQUE DE CUISSON À INDUCTION

(30) Priorität: 16.02.2021 DE 102021103594
(43) Veröffentlichungstag der Anmeldung: 17.08.2022
(73) Patentinhaber: Miele & Cie. KG, 33332 Gütersloh (DE)
(72) Erfinder: Ennen, Volker, 32257 Bünde (DE); Schridde, Timo, 33607 Bielefeld (DE)

(56) Entgegenhaltungen:
- WO-A1-2016/126915
- DE-A1- 102013 006 649
- DE-A1- 19 754 851
- US-A1- 2015 153 049
- US-A1- 2017 150 840

## Beschreibung

Die Erfindung betrifft ein Küchenutensil zum Aufstellen auf ein Induktionskochfeld.

Derartige Küchenutensilien, beispielsweise Kochtöpfe, Bratpfannen oder dergleichen, sind aus dem Stand der Technik in einer Vielzahl von Ausführungsformen bereits vorbekannt.

So zeigen die Druckschriften DE 197 54 851 A1 und US 2015/0153049 A1 und US 2009/0065500 A1 ein Gargeschirr mit einem Gargeschirrboden, welcher eine Wärmeverteilschicht und eine Wärmeerzeugungsschicht aufweist.

Aus der Druckschrift US 2017/0150840 A1 ist es bekannt bei Gargeschirr für Gaskochstellen im Gargeschirrboden eine Wärmeverteilschicht vorzusehen, welche unterseitig partiell mit Vorsprüngen in Richtung Aufstellfläche ausgeführt ist.

In der Druckschrift US 2010/0147832 A1 ist beschrieben, dass zur Verbesserung der elektromagnetischen Kopplung zwischen Gargeschirr und Kochfeld in dem Gargeschirr Ferrite vorgesehen sein können.

Das nicht nur Kochtöpfe und Bratpfannen induktiv beheizt werden können, sondern auch Kochkessel für Großküchen zeigt die Druckschrift WO 2020/182262 A1.

Aus der Druckschrift DE 197 54 851 A1 ist bekannt, dass in einem Kochgeschirrboden zwischen einer Wärmeerzeugungsschicht und einer Außenschale ein Hohlraum ist. In diesem Hohlraum kann ein Schaltelement mit einem Bimetall und einem durch das Bimetall bewegbaren Magneten vorgesehen sein. Mittels des Schaltelements kann bei Erreichen einer vorbestimmten Temperatur der Energieeintrag in das Kochgeschirr abgeschaltet werden.

Die Druckschrift DE 10 2013 006 649 A1 offenbart ein Kochgeschirr mit einer Bodenwandung, wobei die Außenoberfläche der Bodenwandung einen erhabenen Bereich aufweist. Hierdurch wird ein Spalt zwischen der Außenseite der Bodenwandung und der Kochzonenoberfläche eines Induktionskochgerätes ausgebildet, wodurch der Wärmestrom aus dem Kochgeschirr heraus reduziert wird.

Die Druckschrift WO 2016/126915 A1 offenbart ein Kochgeschirr mit einer Bodenwandung welche gekrümmt ausgeführt ist.

Ausgehend von dem bekannten Stand der Technik stellt sich der Erfindung somit das Problem, ein Küchenutensil zum Aufstellen auf ein Induktionskochfeld zu verbessern.

Erfindungsgemäß wird dieses Problem durch ein Küchenutensil mit den Merkmalen des Patentanspruchs 1 gelöst.

Der Begriff Küchenutensil ist hier von allgemeiner Bedeutung und umfasst neben den vorgenannten Kochtöpfen und Bratpfannen auch andere Gargefäße wie beispielsweise Bräter oder Grillplatten. Ferner umfasst der Begriff Küchenutensil hier jede Art von sinnvollerweise auf ein Induktionskochfeld aufstellbaren Utensilien, bei denen mittels der Induktionsspule des Induktionskochfelds Energie in das jeweilige Utensil eingekoppelt werden soll. Rein exemplarisch seien hier Utensilien mit induktiven Heizelementen, wie beispielsweise Kaffeemaschinen oder Teekocher, und Utensilien mit Antriebsmotoren, wie beispielsweise Mühlen, genannt. Vorteilhafte Ausgestaltungen und Weiterbildungen der Erfindung ergeben sich aus den nachfolgenden Unteransprüchen.

Das Küchenutensil umfasst eine Innenschale mit einem Innenboden, eine von der Innenschale durch einen Zwischenraum beabstandete Außenschale mit einem Außenboden und eine zwischen dem Innenboden und dem Außenboden mit Abstand zu der Außenschale angeordnete induktive Heizvorrichtung, wobei die Heizvorrichtung eine mit dem Innenboden wärmeleitend verbundene Wärmeverteilschicht und eine auf der dem Innenboden abgewandten Seite der Wärmeverteilschicht an der Wärmeverteilschicht wärmeleitend angeordnete und zu dem Außenboden beabstandete Wärmeerzeugungsschicht aufweist, und wobei die Wärmeerzeugungsschicht in einer Aufstelllage des Küchenutensils auf dem Induktionskochfeld mittelbar und/oder unmittelbar mit einer Induktionsspule des Induktionskochfelds induktiv koppelbar ist.

Der mit der Erfindung erreichbare Vorteil besteht insbesondere darin, dass ein Küchenutensil zum Aufstellen auf ein Induktionskochfeld verbessert ist. Aufgrund der erfindungsgemäßen Ausbildung des Küchenutensils ist es möglich, dass die Außenschale des Küchenutensils, nämlich der Außenboden des Küchenutensils, im Vergleich zu der Innenschale des Küchenutensils auch bei einem Betrieb des Küchenutensils eine deutlich niedrigere Temperatur aufweist. Erfindungsgemäß ist somit ein gedämmtes Küchenutensil auf konstruktiv und fertigungstechnisch einfache Art und Weise realisierbar, ohne, dass dadurch die induktive Kopplung zwischen der Induktionsspule des Induktionskochfelds auf der einen Seite und der Wärmeerzeugungsschicht der Heizvorrichtung des erfindungsgemäßen Küchenutensils auf der anderen Seite bei auf dem Induktionskochfeld aufgestellten Küchenutensil wesentlich beeinträchtigt wird. Darüber hinaus ist das erfindungsgemäße Küchenutensil auch bei üblichen Induktionskochfeldern einsetzbar, so dass kein spezielles Induktionskochfeld, beispielsweise mit einem auf das erfindungsgemäße Küchenutensil speziell angepassten Schwingkreis, erforderlich ist. Ferner sind mittels der erfindungsgemäßen Ausbildung des Küchenutensils die Lebensdauer eines Generators der Induktionsspule des Induktionskochfelds sowie die Messgenauigkeit einer etwaigen Küchenutensilpositions- und/oder Küchenutensilgrößenbestimmung, trotz gedämmten Küchenutensil, im Wesentlichen nicht negativ beeinflusst.

Grundsätzlich ist das erfindungsgemäße Küchenutensil zum Aufstellen auf ein Induktionskochfeld nach Art, Funktionsweise, Material und Dimensionierung in weiten geeigneten Grenzen frei wählbar. Beispielsweise ist es denkbar, dass die Wärmeverteilschicht und die Wärmeerzeugungsschicht der Heizvorrichtung als ein gemeinsames, bevorzugt einstückiges, Bauteil ausgebildet sind.

Erfindungsgemäß ist vorgesehen, dass die Wärmeerzeugungsschicht als mindestens eine Platte ausgebildet ist, deren Randbereich zumindest abschnittsweise, bevorzugt vollständig, derart in Richtung des Außenbodens hervorragt, dass ein Abstand zwischen der Wärmeerzeugungsschicht und dem Außenboden an einer Peripherie des Außenbodens im Vergleich zu einem Rest der Wärmeerzeugungsschicht reduziert ist. Auf diese Weise ist das Küchenutensil auf konstruktiv und fertigungstechnisch besonders einfache Art realisierbar. Ferner ist es dadurch möglich, das Magnetfeld bevorzugt in dem Randbereich der als Platte ausgebildeten Wärmeerzeugungsschicht einzukoppeln.

Eine vorteilhafte Weiterbildung der vorgenannten Weiterbildung des Küchenutensils sieht vor, dass mindestens eine der mindestens einen Platte derart ausgebildet ist, dass diese Platte zusätzlich in einem zentralen Bereich des Außenbodens in Richtung des Außenbodens hervorragt, so dass ein Abstand zwischen der Wärmeerzeugungsschicht und dem Außenboden an der Peripherie und in dem zentralen Bereich des Außenbodens im Vergleich zu dem Rest der Wärmeerzeugungsschicht reduziert ist. Hierdurch ist zusätzlich zu der magnetischen Einkopplung in der Peripherie des Außenbodens auch eine Einkopplung des Magnetfelds in das Küchenutensil in dem zentralen Bereich des Außenbodens ermöglicht.

Eine vorteilhafte Weiterbildung der beiden letztgenannten Ausführungsformen des Küchenutensils sieht vor, dass die Platte in dem Bereich der Peripherie des Außenbodens und/oder in dem zentralen Bereich des Außenbodens von einer Spezialdämmung umgeben ist, wobei die Spezialdämmung eine im Vergleich zu einem in dem Zwischenraum befindlichen Gas und/oder einer in dem Zwischenraum angeordneten Dämmung geringere Wärmeleitfähigkeit aufweist. Auf diese Weise ist es gleichzeitig zu der bevorzugten Einkopplung des Magnetfelds in das Küchenutensil in der Peripherie und/oder dem zentralen Bereich des Außenbodens möglich, eine ungewünschte Wärmeleitung von der Innenschale zu der Außenschale wirkungsvoll zu verringern.

Gemäß einem Aspekt ist der Abstand zwischen der Wärmeerzeugungsschicht und dem Außenboden stets größer als 3 Millimeter, vorzugsweise größer als 5 Millimeter. Hierdurch ist eine verbesserte thermische Trennung von Wärmeerzeugungsschicht und dem Außenboden möglich, bei zugleich guter Einkopplung des elektromagnetischen Feldes.

Eine besonders vorteilhafte Weiterbildung des Küchenutensils sieht vor, dass zwischen der Wärmerzeugungsschicht und der Außenschale eine Kopplungsvorrichtung zur induktiven Kopplung der Wärmeerzeugungsschicht mit der Induktionsspule des Induktionskochfelds angeordnet ist. Hierdurch ist die magnetische Kopplung zwischen der Induktionsspule des Induktionskochfelds auf der einen Seite und der Wärmeerzeugungsschicht der Heizvorrichtung des Küchenutensils auf der anderen Seite bei auf das Induktionskochfeld aufgestellten Küchenutensil weiter verbessert.

Eine vorteilhafte Weiterbildung der vorgenannten Ausführungsform des Küchenutensils sieht vor, dass die Kopplungsvorrichtung mindestens ein Ferritstück, bevorzugt mindestens einen Ferritring und/oder eine Mehrzahl von mindestens einen Ring bildenden ringförmig angeordneten Ferritstücken, aufweist, besonders bevorzugt, dass der mindestens eine Ferritring und/oder der mindestens eine Ring an der Peripherie und/oder in dem zentralen Bereich des Außenbodens angeordnet ist. Auf diese Weise ist die magnetische Kopplung zwischen dem Induktionskochfeld und dem Küchenutensil auf konstruktiv und fertigungstechnisch einfache Art verwirklichbar. Dies gilt besonders für die bevorzugte und insbesondere für die besonders bevorzugte Ausführungsform dieser Weiterbildung. Die vorgenannten Ringe können beispielsweise als Kreisringe ausgebildet sein; dies ist jedoch nicht zwingend der Fall.

Derartige Ringe schließen auch eine strahlenförmige Anordnung von einzelnen Ferritstücken ein, wobei die Strahlen radial zum Flächenschwerpunkt der Aufstellfläche des Küchenutensils ausgerichtet sind. Die somit in Form eines Kreuzes oder Sterns mit drei, vier, fünf, sechs oder mehr Strahlen angeordneten Ferritstücke erfüllen den gleichen Zweck wie Ringformen.

Insbesondere bei dem Einsatz bei Vollflächenkochfeldern, aber nicht nur dort, könnte es auch hilfreich sein, nicht nur mittig und/oder am Rand des Küchenutensils Ferrite anzuordnen, sondern die Ferritstücke über den ganzen Bereich der Aufstellfläche zu verteilen. Andere Anordnungsformen sind zum Beispiel ein Kreutz aus Ferriten, welches den Topfboden in 4 kleinere Bereiche unterteilt, oder mehrere Innenkreise aus Ferrit oder ein Raster aus Ferriten.

Derartige Anordnungen können, beispielsweise bei einem nicht perfekt positionierten Topf, unterstützend wirken. Eine weitere, feinere Unterteilung des Topfbodens durch weitere Ferritelemente, beispielsweise auch ungleichmäßig über die Aufstellfläche verteilt, insbesondere bei Töpfen mit nicht kreisförmigen Aufstellflächen, verbessert die Möglichkeiten der Topferkennung und Optimierung der Topfposition.

Eine vorteilhafte Weiterbildung der beiden letztgenannten Weiterbildungen des Küchenutensils sieht vor, dass eine in dem Zwischenraum angeordnete Dämmung die Kopplungsvorrichtung aufweist, wobei die Dämmung Ferrit und einen Dämmstoff mit einer im Vergleich zu Ferrit geringeren Wärmeleitfähigkeit umfasst. Hierdurch ist eine gewünschte Positionierung des Ferrits relativ zu der Wärmeerzeugungsschicht der Heizvorrichtung des Küchenutensils auf konstruktiv und fertigungstechnisch besonders einfache Weise realisierbar. Ferner ist dadurch das Küchenutensil, nämlich die Ausführung eines gedämmten Küchenutensils, mittels der Dämmwirkung des Dämmstoffs weiter verbessert.

Eine vorteilhafte Weiterbildung der letztgenannten Ausführungsform des Küchenutensils sieht vor, dass der Dämmstoff der Dämmung mindestens eine Aussparung für eine Anordnung des Ferrits in dem Dämmstoff aufweist und/oder, dass der Ferrit und der Dämmstoff als ein die Dämmung bildendes Gemisch ausgebildet sind. Der Begriff ''Gemisch" ist hier allgemein zu verstehen und umfasst beispielsweise auch Gemenge. Auf diese Weise ist die Herstellung der den Ferrit aufweisenden Dämmung wesentlich vereinfacht. Das vorgenannte Gemisch aus dem Ferrit und dem Dämmstoff kann beispielsweise als ein schüttfähiges Gemisch ausgebildet sein. So kann ein Gemisch aus einem als Aerogel ausgebildeten Dämmstoff und darin eingelagerten Ferrit beispielsweise zur schrittweisen Herstellung dieser Dämmung verwendet werden. Optional kann ein Rest des Zwischenraums zwischen der Innenschale und der Außenschale mittels eines materialgleichen oder materialverschiedenen Dämmstoffes ganz oder teilweise ausgefüllt sein. Denkbar ist aber auch, dass der Ferrit in einer festen Dämmstoffmatrix, beispielsweise einer Kunststoffmatrix, eingelagert ist. Hierdurch kann dann beispielsweise ein ferrithaltiger Kunststoffring aufgebaut sein. Analog zu oben kann ein Rest des Zwischenraums zwischen der Innenschale und der Außenschale wieder mittels eines materialgleichen oder materialverschiedenen Dämmstoffes ganz oder teilweise ausgefüllt sein. Darüber hinaus ist es möglich, dass ein als Schaum ausgebildeter und mit Ferrit durchsetzter Dämmstoff verwendet wird. Dabei kann der Schaum derart ausgebildet sein, dass der als Ferritpartikel vorliegende Ferrit teilweise in den Schaum einsinken kann.

Eine weitere vorteilhafte Weiterbildung des Küchenutensils sieht vor, dass an der in der Aufstelllage dem Induktionskochfeld zugewandten Seite der Außenschale mindestens ein Abstandhalter derart angeordnet ist, dass sich in der Aufstelllage des Küchenutensils zwischen dem Induktionskochfeld und der Außenschale ein Luftspalt ergibt. Hierdurch ist der Schutz des Induktionskochfelds, nämlich einer dem Küchenutensil zugewandten Abdeckplatte des Induktionskochfelds, vor einer ungewünschten Wärmeeinwirkung des Küchenutensils auf das Induktionskochfeld zusätzlich verbessert.

Eine besonders vorteilhafte Weiterbildung der vorgenannten Ausführungsform des Küchenutensils sieht vor, dass der Abstandhalter zumindest teilweise aus Ferrit ausgebildet ist, bevorzugt, dass der Abstandhalter an dem Außenboden der Außenschale angeordnet ist. Auf diese Weise ist eine gute magnetische Kopplung zwischen der Induktionsspule des Induktionskochfelds auf der einen Seite und der Wärmeerzeugungsschicht der Heizvorrichtung des Küchenutensils auf der anderen Seite bei einem auf das Induktionskochfeld aufgestellten Küchenutensil, trotz des Luftspalts, auf konstruktiv und fertigungstechnisch einfache Art gewährleistet. Dies gilt insbesondere für die bevorzugte Ausführungsform dieser Weiterbildung.

Ein Auführungsbeispiel der Erfindung ist in den Zeichnungen rein schematisch dargestellt und wird nachfolgend näher beschrieben. Es zeigt
- Figur 1a: ein erstes Ausführungsbeispiel in einer ersten Variante, in einer geschnittenen Seitenansicht,
- Figur 1b: das erste Ausführungsbeispiel in einer zweiten Variante, in einer teilweisen, geschnittenen Seitenansicht,
- Figur 1c: das erste Ausführungsbeispiel in einer dritten Variante, in einer teilweisen, geschnittenen Seitenansicht,
- Figur 2a: ein zweites Ausführungsbeispiel in einer ersten Variante, in einer geschnittenen Seitenansicht,
- Figur 2b: das zweite Ausführungsbeispiel in einer zweiten Variante, in einer geschnittenen Seitenansicht,
- Figur 2c: das zweite Ausführungsbeispiel in einer dritten Variante, in einer geschnittenen Draufsicht und
- Figur 2d: das zweite Ausführungsbeispiel in einer vierten Variante, in einer teilweisen, geschnittenen Seitenansicht.

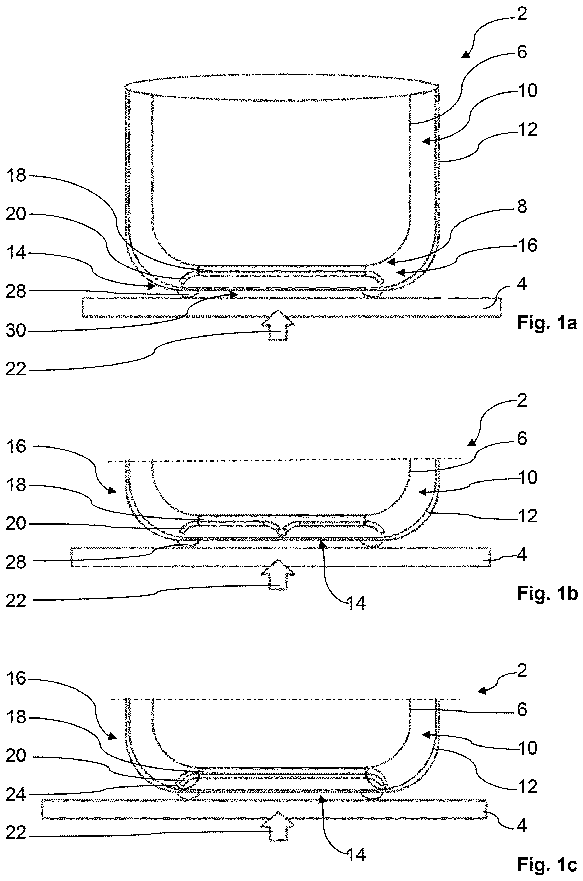

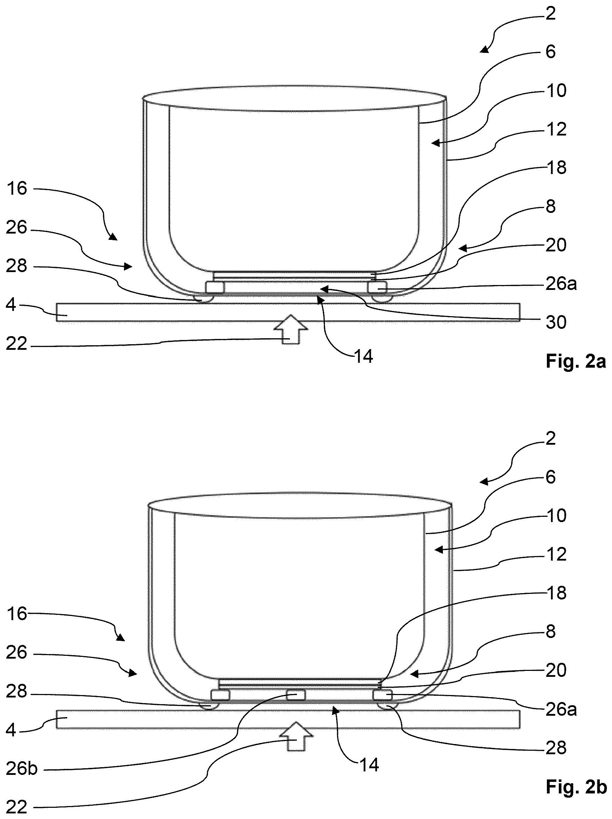

Das zweite Ausführungsbeispiel gemäß Fig. 2a bis 2d ist nicht Teil der Erfindung. In den Fig. 1a bis 1c ist ein erstes Ausführungsbeispiel des erfindungsgemäßen Küchenutensils in drei Varianten dargestellt.

Das Küchenutensil 2 zum Aufstellen auf ein Induktionskochfeld 4 ist hier als ein Kochtopf ausgebildet und umfasst eine Innenschale 6 mit einem Innenboden 8, eine von der Innenschale 6 durch einen Zwischenraum 10 beabstandete Außenschale 12 mit einem Außenboden 14 und eine zwischen dem Innenboden 8 und dem Außenboden 14 mit Abstand zu der Außenschale 12 angeordnete induktive Heizvorrichtung 16, wobei die Heizvorrichtung 16 eine mit dem Innenboden 8 wärmeleitend verbundene Wärmeverteilschicht 18 und eine auf der dem Innenboden 8 abgewandten Seite der Wärmeverteilschicht 18 an der Wärmeverteilschicht 18 wärmeleitend angeordnete und zu dem Außenboden 14 beabstandete Wärmeerzeugungsschicht 20 aufweist. Die Wärmeerzeugungsschicht 20 ist in einer in den Fig. 1a bis 1c dargestellten Aufstelllage des Küchenutensils 2 auf dem Induktionskochfeld 4 unmittelbar mit einer nicht dargestellten Induktionsspule des Induktionskochfelds 4 induktiv koppelbar. Die induktive Kopplung zwischen der Induktionsspule und der Wärmeerzeugungsschicht 20 der Heizvorrichtung 16 des Küchenutensils 2 ist in den Fig. 1a bis 1c jeweils durch einen Pfeil 22 symbolisiert.

Die Wärmeerzeugungsschicht 20 ist bei dem vorliegenden Ausführungsbeispiel als eine Platte ausgebildet, deren Randbereich vollständig oder teilweise derart in Richtung des Außenbodens 14 hervorragt, dass ein Abstand zwischen der Wärmeerzeugungsschicht 20 und dem Außenboden 14 an einer Peripherie des Außenbodens 14 im Vergleich zu einem Rest der Wärmeerzeugungsschicht 20 reduziert ist. Hierfür ist der Randbereich der als Platte ausgebildeten Wärmeerzeugungsschicht 20, wie beispielsweise anhand der ersten Variante dieses Ausführungsbeispiels aus der Fig. 1a ersichtlich, in Richtung des Außenbodens 14 gekrümmt, nämlich ausgezogen.

Die zweite Variante des vorliegenden Ausführungsbeispiels gemäß der Fig. 1b ist analog zu der ersten Variante gemäß der Fig. 1a ausgebildet. Im Unterschied zu der ersten Variante ist die als Platte ausgebildete Wärmeerzeugungsschicht 20 derart ausgebildet, dass diese zusätzlich in einem zentralen Bereich des Außenbodens 14 in Richtung des Außenbodens 14 hervorragt, so dass ein Abstand zwischen der Wärmeerzeugungsschicht 20 und dem Außenboden 14 an der Peripherie und in dem zentralen Bereich des Außenbodens 14 im Vergleich zu dem Rest der Wärmeerzeugungsschicht 20 reduziert ist.

Die dritte Variante des vorliegenden Ausführungsbeispiels gemäß der Fig. 1c ist ebenfalls analog zu der ersten Variante gemäß der Fig. 1a ausgebildet. Im Unterschied zu dieser ersten Variante ist die als Platte ausgebildete Wärmeerzeugungsschicht 20 in dem Bereich der Peripherie des Außenbodens 14 von einer Spezialdämmung 24 umgeben, wobei die Spezialdämmung 24 eine im Vergleich zu einem in dem Zwischenraum 10 befindlichen Gas geringere Wärmeleitfähigkeit aufweist. Bei dem in dem Zwischenraum 10 befindlichen Gas handelt es sich bei dem vorliegenden Ausführungsbeispiel gemäß der Fig. 1a bis 1c jeweils um Luft. Die Luft ist nicht dargestellt. Denkbar ist es aber auch, dass in dem Zwischenraum andere geeignete Gase oder Feststoffe, ggf. auch Fluide oder Gemische daraus, zwecks Wärmedämmung eingeschlossen sind.

Wie der Fachmann leicht erkennt, ist die Besonderheit der dritten Variante auch bei der Ausführungsform gemäß der zweiten Variante einsetzbar. Entsprechend wäre die als Platte ausgebildete Wärmeerzeugungsschicht in dem Bereich der Peripherie des Außenbodens und in dem zentralen Bereich des Außenbodens von einer Spezialdämmung umgeben, wobei die Spezialdämmung eine im Vergleich zu einem in dem Zwischenraum befindlichen Gas und/oder einer in dem Zwischenraum angeordneten Dämmung geringere Wärmeleitfähigkeit aufweisen würde.

In den Fig. 2a bis 2d ist ein zweites Ausführungsbeispiel des Küchenutensils in vier Varianten dargestellt. Wie bei dem ersten Ausführungsbeispiel handelt es sich auch bei dem zweiten Ausführungsbeispiel um eine rein exemplarische und damit nicht beschränkende Darstellung des Küchenutensils. Beispielsweise wäre es denkbar, dass das erste Ausführungsbeispiel und das zweite Ausführungsbeispiel miteinander kombiniert werden.

Im Folgenden wird das zweite Ausführungsbeispiel lediglich im Umfang der Unterschiede zu dem ersten Ausführungsbeispiel erläutert. Gleiche oder gleichwirkende Bauteile sind mit den gleichen Bezugszeichen bezeichnet.

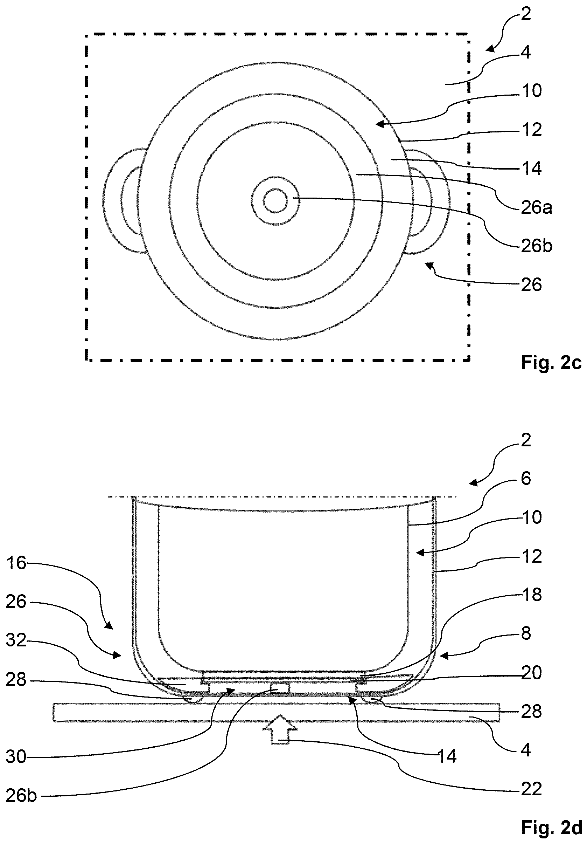

Im Unterschied zu dem ersten Ausführungsbeispiel ragt die als Platte ausgebildete Wärmeerzeugungsschicht 20 der Heizvorrichtung 16 des Küchenutensils 2 in dem Randbereich der Wärmeerzeugungsschicht 20 nicht in Richtung des Außenbodens 14 hervor. Stattdessen ist die Wärmerzeugungsschicht 20, analog zu der Wärmeverteilschicht 18 der Heizvorrichtung 16, im Wesentlichen als eine plane Platte ausgebildet. Siehe hierzu die Fig. 2a, 2b und 2d.

Ferner unterscheidet sich das zweite Ausführungsbeispiel von dem oben erläuterten ersten Ausführungsbeispiel des Küchenutensils dadurch, dass zwischen der Wärmerzeugungsschicht 20 und der Außenschale 12 eine Kopplungsvorrichtung 26 zur induktiven Kopplung der Wärmeerzeugungsschicht 20 mit der nicht dargestellten Induktionsspule des Induktionskochfelds 4 angeordnet ist. Die Wärmeerzeugungsschicht 20 ist bei dem vorliegenden Ausführungsbeispiel bei auf dem Induktionskochfeld 4 aufgestellten Küchenutensil 2 also mittelbar, nämlich mittels der Kopplungsvorrichtung 26, mit der Induktionsspule des Induktionskochfelds 4 induktiv gekoppelt. Das Küchenutensil 2 ist in den Fig. 2a bis 2d jeweils in dessen Aufstelllage dargestellt.

Die Kopplungsvorrichtung 26 der ersten Variante gemäß der Fig. 2a weist ein Ferritstück, nämlich einen Ferritring 26a auf, wobei der Ferritring 26a an der Peripherie des Außenbodens 14 angeordnet ist. Alternativ oder zusätzlich dazu ist es in anderen Varianten des vorliegenden Ausführungsbeispiels denkbar, dass die Kopplungsvorrichtung beispielsweise als eine Mehrzahl von mindestens einen Ring bildenden ringförmig angeordneten Ferritstücken ausgebildet ist, bevorzugt, dass der mindestens eine Ring an der Peripherie und/oder in dem zentralen Bereich des Außenbodens angeordnet ist.

Ferner sind bei der vorliegenden ersten Variante des zweiten Ausführungsbeispiels an der in der dargestellten Aufstelllage dem Induktionskochfeld 4 zugewandten Seite der Außenschale 12 insgesamt drei Abstandhalter 28 derart angeordnet, dass sich in der Aufstelllage des Küchenutensils 2 zwischen dem Induktionskochfeld 4 und der Außenschale 14 ein Luftspalt 30 ergibt. In den Fig. 1a bis 1c sind lediglich zwei Abstandhalter 28 sichtbar. Die Abstandhalter 28 sind hier zumindest teilweise aus Ferrit ausgebildet, wobei die Abstandhalter 28 an dem Außenboden 14 der Außenschale 12 angeordnet sind. Denkbar ist jedoch auch, dass der mindestens eine Abstandhalter im Wesentlichen vollständig aus Ferrit ausgebildet ist. Ein derartiger Abstandhalter kann dann beispielsweise eine Schutzschicht zum Schutz des Induktionskochfelds aufweisen. Ferner ist es möglich, dass der mindestens eine Abstandhalter kein Ferrit enthält und/oder beispielsweise nicht an dem Außenboden, sondern an einer anderen Stelle der Außenschale angeordnet ist.

Bei der in der Fig. 2b dargestellten zweiten Variante des zweiten Ausführungsbeispiels weist die Kopplungsvorrichtung 26 zusätzlich zu dem als Ferritring ausgebildeten Ferritstück 26a ein weiteres Ferritstück 26b auf, wobei das weitere Ferritstück 26b in dem zentralen Bereich des Außenbodens 14 angeordnet ist.

Die in der Fig. 2c gezeigte dritte Variante des zweiten Ausführungsbeispiels entspricht im Wesentlichen der vorgenannten zweiten Variante gemäß der Fig. 2b. Im Unterschied dazu ist das in dem zentralen Bereich des Außenbodens 14 angeordnete Ferritstück 26b ebenfalls als ein Ferritring ausgebildet.

Ferner ist in der Fig. 2d eine vierte Variante des zweiten Ausführungsbeispiels dargestellt. Hier weist eine in dem Zwischenraum 10 angeordnete Dämmung 32 die Kopplungsvorrichtung 26 auf, wobei die Dämmung 32 Ferrit und einen Dämmstoff mit einer im Vergleich zu Ferrit geringeren Wärmeleitfähigkeit umfasst. Der Ferrit und der Dämmstoff sind hier als ein die Dämmung 32 bildendes Gemisch ausgebildet. Wie aus der Fig. 2d darüber hinaus hervorgeht, bildet die Dämmung 32 einen ferrithaltigen Ring aus, der, analog zu den ersten drei Varianten, in der Peripherie des Außenbodens 14 der Außenschale 12 angeordnet ist. Zusätzlich dazu weist die vorliegende vierte Variante, beispielsweise analog zu der zweiten Variante gemäß der Fig. 2b, ein in dem zentralen Bereich des Außenbodens 14 angeordnetes Ferritstück 26b auf. Alternativ dazu ist es auch möglich, dass, analog zu der dritten Variante gemäß der Fig. 2c, anstelle des vorgenannten Ferritstücks 26b ein Ferritring in dem zentralen Bereich des Außenbodens angeordnet ist. Wie oben bereits erläutert, wäre es in wieder anderen Ausführungsformen des Küchenutensils denkbar, dass alternativ dazu die Kopplungsvorrichtung beispielsweise als eine Mehrzahl von mindestens einen Ring bildenden ringförmig angeordneten Ferritstücken ausgebildet ist, bevorzugt, dass der mindestens eine Ring an der Peripherie und/oder in dem zentralen Bereich des Außenbodens angeordnet ist.

Das vorgenannte Gemisch aus dem Ferrit und dem Dämmstoff zur Herstellung der Dämmung 32 kann beispielsweise als ein schüttfähiges Gemisch ausgebildet sein. So kann ein Gemisch aus einem als Aerogel ausgebildeten Dämmstoff und darin eingelagerten Ferrit beispielsweise zur schrittweisen Herstellung dieser Dämmung 32 verwendet werden. Optional kann ein Rest des Zwischenraums zwischen der Innenschale und der Außenschale mittels eines materialgleichen oder materialverschiedenen Dämmstoffes ganz oder teilweise ausgefüllt sein.

In anderen Ausführungsformen der Erfindung ist es aber auch denkbar, dass der Ferrit in einer festen Dämmstoffmatrix, beispielsweise einer Kunststoffmatrix, eingelagert ist. Hierdurch kann dann beispielsweise ein ferrithaltiger Kunststoffring aufgebaut sein. Analog zu oben kann ein Rest des Zwischenraums zwischen der Innenschale und der Außenschale wieder mittels eines materialgleichen oder materialverschiedenen Dämmstoffes ganz oder teilweise ausgefüllt sein.

Darüber hinaus ist es möglich, dass in wieder anderen Ausführungsformen der Erfindung zur Bildung der Dämmung ein als Schaum ausgebildeter und mit Ferrit durchsetzter Dämmstoff verwendet wird. Dabei kann der Schaum derart ausgebildet sein, dass der als Ferritpartikel vorliegende Ferrit teilweise in den Schaum einsinken kann.

Die vorgenannten beispielhaften Ausführungen zur Herstellung der als Gemisch ausgebildeten Dämmung sind selbstverständlich auch für die Ausbildung der Kopplungsvorrichtung im zentralen Bereich des Außenbodens einsetzbar.

Die als Gemisch aus Ferrit und Dämmstoff gebildete Dämmung kann darüber hinaus eine dämmende Beschichtung aufweisen, die im Vergleich zu der vorgenannten Dämmung eine reduzierte Wärmeleitfähigkeit aufweist. Analog dazu wäre es auch möglich, Ferritstücke, beispielsweise die oben genannten Ferritringe, mit einer derartigen dämmenden Beschichtung zu beschichten.

Aufgrund der Ausbildung des Küchenutensils gemäß der vorliegenden Ausführungsbeispiele ist es möglich, dass die Außenschale 12 des Küchenutensils 2, nämlich der Außenboden 14 des Küchenutensils 2, im Vergleich zu der Innenschale 6 des Küchenutensils 2 auch bei einem Betrieb des Küchenutensils 2 eine deutlich niedrigere Temperatur als die Innenschale 6 des Küchenutensils 2 aufweist. Somit ist ein gedämmtes Küchenutensil 2 auf konstruktiv und fertigungstechnisch einfache Art und Weise realisierbar, ohne, dass dadurch die induktive Kopplung zwischen der nicht dargestellten Induktionsspule des Induktionskochfelds 4 auf der einen Seite und der Wärmeerzeugungsschicht 20 der Heizvorrichtung 16 des Küchenutensils 2 auf der anderen Seite bei auf dem Induktionskochfeld 4 aufgestellten Küchenutensil 2 wesentlich beeinträchtigt wird. Darüber hinaus ist das Küchenutensil 2 auch bei üblichen Induktionskochfeldern einsetzbar, so dass kein spezielles Induktionskochfeld, beispielsweise mit einem auf das Küchenutensil 2 speziell angepassten Schwingkreis, erforderlich ist. Ferner sind mittels der Ausbildung des Küchenutensils 2 die Lebensdauer eines Generators der Induktionsspule des Induktionskochfelds 4 sowie die Messgenauigkeit einer etwaigen Küchenutensilpositions- und/oder Küchenutensilgrößenbestimmung, trotz gedämmten Küchenutensil 2, im Wesentlichen nicht negativ beeinflusst.

Die Erfindung ist nicht auf die vorliegenden Ausführungsbeispiele beschränkt. Beispielsweise kann die Erfindung auch bei andersartigen Küchenutensilien vorteilhaft eingesetzt werden. Rein exemplarisch seien hier lediglich die folgenden genannt: Gargefäße, wie Bratpfannen, Bräter, Grillplatten, Kaffeemaschinen, Teekocher, und Utensilien mit Antriebsmotoren, wie Mühlen oder dergleichen.

Die Erfindung ist ferner für den Haushaltsbereich wie auch für gewerbliche Küchen, beispielsweise Großküchen oder dergleichen, vorteilhaft einsetzbar.

Insbesondere ist die Erfindung nicht auf die oben erläuterten konstruktiven und fertigungstechnischen Details beschränkt. Wie oben bereits ausgeführt, können die einzelnen Varianten der beiden Ausführungsbeispiele untereinander sowie ausführungsbeispielübergreifend miteinander in für den jeweiligen Einzelfall sinnvoller Art und Weise kombiniert werden. Entsprechendes gilt auch für Kombinationsmöglichkeiten, die von den Ansprüchen gedeckt sind, jedoch in den Ausführungsbeispielen nicht ausgeführt sind.

Darüber hinaus kann der Dämmstoff der Dämmung alternativ oder zusätzlich mindestens eine Aussparung für eine Anordnung des Ferrits in dem Dämmstoff aufweisen. Diese Ausbildung ermöglicht eine konstruktiv und fertigungstechnisch einfache Positionierung und Befestigung von Ferritstücken wie beispielsweisen den Ferritringen aus dem zweiten Ausführungsbeispiel.

## Patentansprüche

1. Küchenutensil (2) zum Aufstellen auf ein Induktionskochfeld (4), umfassend
eine Innenschale (6) mit einem Innenboden (8),
eine von der Innenschale (6) durch einen Zwischenraum (10) beabstandete Außenschale (12) mit einem Außenboden (14) und
eine zwischen dem Innenboden (8) und dem Außenboden (14) mit Abstand zu der Außenschale (12) angeordnete induktive Heizvorrichtung (16),
wobei die Heizvorrichtung (16) eine mit dem Innenboden (8) wärmeleitend verbundene Wärmeverteilschicht (18) und eine auf der dem Innenboden (8) abgewandten Seite der Wärmeverteilschicht (18) an der Wärmeverteilschicht (18) wärmeleitend angeordnete und zu dem Außenboden (14) beabstandete Wärmeerzeugungsschicht (20) aufweist, und
wobei die Wärmeerzeugungsschicht (20) in einer Aufstelllage des Küchenutensils (2) auf dem Induktionskochfeld (4) mittelbar und/oder unmittelbar mit einer Induktionsspule des Induktionskochfelds (4) induktiv koppelbar ist,
**dadurch gekennzeichnet, dass**
die Wärmeerzeugungsschicht (20) als mindestens eine Platte ausgebildet ist, deren Randbereich zumindest abschnittsweise, bevorzugt vollständig, derart in Richtung des Außenbodens (14) hervorragt, dass ein Abstand zwischen der Wärmeerzeugungsschicht (20) und dem Außenboden (14) im Bereich der Peripherie des Außenbodens (14) geringer ist als im Vergleich zu einem Rest der Wärmeerzeugungsschicht (20).

2. Küchenutensil (2) nach Anspruch 1, wobei zwischen der Wärmerzeugungsschicht (20) und der Außenschale (12) eine Kopplungsvorrichtung (26) zur induktiven Kopplung der Wärmeerzeugungsschicht (20) mit der Induktionsspule des Induktionskochfelds (4) angeordnet ist.

3. Küchenutensil (2) nach einem der vorhergehenden Ansprüche, **dadurch gekennzeichnet, dass** mindestens eine der mindestens einen Platte derart ausgebildet ist, dass diese Platte zusätzlich in einem zentralen Bereich des Außenbodens (14) in Richtung des Außenbodens (14) hervorragt, so dass ein Abstand zwischen der Wärmeerzeugungsschicht (20) und dem Außenboden (14) im Bereich der Peripherie des Außenbodens (14) und in dem zentralen Bereich des Außenbodens (14) im Vergleich zu dem Rest der Wärmeerzeugungsschicht (20) reduziert ist.

4. Küchenutensil (2) nach einem der vorhergehenden Ansprüche, wobei der Abstand zwischen der Wärmeerzeugungsschicht (20) und dem Außenboden (14) im Bereich der Peripherie des Außenbodens (14) und/oder in dem zentralen Bereich des Außenbodens (14) größer als 3 Millimeter ist, insbesondere größer als die Materialstärke der Wärmeerzeugungsschicht (20) ist.

5. Küchenutensil (2) nach einem der vorhergehenden Ansprüche, wobei die Platte in dem Bereich der Peripherie des Außenbodens (14) und/oder in dem zentralen Bereich des Außenbodens von einer Spezialdämmung (24) umgeben ist, wobei die Spezialdämmung (24) eine im Vergleich zu einem in dem Zwischenraum (10) befindlichen Gas und/oder einer in dem Zwischenraum angeordneten Dämmung geringere Wärmeleitfähigkeit aufweist.

6. Küchenutensil (2) nach einem der vorhergehenden Ansprüche, wobei die Kopplungsvorrichtung (26) mindestens ein Ferritstück (26a; 26a, 26b) umfasst.

7. Küchenutensil (2) nach einem der vorhergehenden Ansprüche, wobei die Kopplungsvorrichtung (26) mindestens einen Ferritring und/oder eine Mehrzahl von mindestens einen Ring bildenden ringförmig angeordneten Ferritstücken, aufweist, besonders bevorzugt, dass der mindestens eine Ferritring und/oder der mindestens eine Ring an der Peripherie und/oder in dem zentralen Bereich des Außenbodens (14) angeordnet ist.

8. Küchenutensil (2) nach einem der beiden vorhergehenden Ansprüche, wobei eine in dem Zwischenraum (10) angeordnete Dämmung (32) die Kopplungsvorrichtung (26) aufweist, wobei die Dämmung (32) Ferrit und einen Dämmstoff mit einer im Vergleich zu Ferrit geringeren Wärmeleitfähigkeit umfasst.

9. Küchenutensil (2) nach dem vorhergehenden Anspruch, wobei der Dämmstoff der Dämmung mindestens eine Aussparung für eine Anordnung des Ferrits in dem Dämmstoff aufweist und/oder, dass der Ferrit und der Dämmstoff als ein die Dämmung (32) bildendes Gemisch ausgebildet sind.

10. Küchenutensil (2) nach einem der vorhergehenden Ansprüche, wobei an der in der Aufstelllage dem Induktionskochfeld (4) zugewandten Seite der Außenschale (12) mindestens ein Abstandhalter (28) derart angeordnet ist, dass sich in der Aufstelllage des Küchenutensils (2) zwischen dem Induktionskochfeld (4) und der Außenschale (12) ein Luftspalt (30) ergibt.

11. Küchenutensil (2) nach dem vorhergehenden Anspruch, wobei der Abstandhalter (28) zumindest teilweise aus Ferrit ausgebildet ist, bevorzugt, dass der Abstandhalter (28) an dem Außenboden (14) der Außenschale (12) angeordnet ist.

## Claims

1. Kitchen utensil (2) for placing on an induction hob (4), comprising an inner shell (6) with an inner base (8),
an outer shell (12) which is spaced from the inner shell (6) by a gap (10) and has an outer base (14), and
an inductive heating device (16) arranged between the inner base (8) and the outer base (14) at a distance from the outer shell (12),
wherein the heating device (16) has a heat distribution layer which is (18) connected to the inner base (8) in a heat-conducting manner, and a heat generation layer (20) which is arranged on the heat distribution layer (18) in a heat-conducting manner, on the side of the heat distribution layer (18) facing away from the inner base (8), and is spaced apart from the outer base (14), and
wherein the heat generation layer (20) can be inductively coupled indirectly and/or directly to an induction coil of the induction hob (4) when the kitchen utensil (2) is in a placement position on the induction hob (4),
**characterised in that**
the heat generation layer (20) is designed as at least one plate, the edge region of which protrudes at least partially, preferably completely, in the direction of the outer base (14) such that a distance between the heat generation layer (20) and the outer base (14) in the region of the periphery of the outer base (14) is smaller than in comparison to the rest of the heat generation layer (20).

2. Kitchen utensil (2) according to claim 1, wherein a coupling device (26) for inductively coupling the heat generation layer (20) to the induction coil of the induction hob (4) is arranged between the heat generation layer (20) and the outer shell (12).

3. Kitchen utensil (2) according to any of the preceding claims, **characterised in that** at least one of the at least one plate is designed such that this plate additionally protrudes in a central region of the outer base (14) in the direction of the outer base (14), so that a distance between the heat generation layer (20) and the outer base (14) in the region of the periphery of the outer base (14) and in the central region of the outer base (14) is reduced in comparison to the rest of the heat generation layer (20).

4. Kitchen utensil (2) according to any of the preceding claims, wherein the distance between the heat generation layer (20) and the outer base (14) in the region of the periphery of the outer base (14) and/or in the central region of the outer base (14) is greater than 3 millimetres, in particular greater than the material thickness of the heat generation layer (20).

5. Kitchen utensil (2) according to any of the preceding claims, wherein the plate is surrounded by a special insulation (24) in the region of the periphery of the outer base (14) and/or in the central region of the outer base, wherein the special insulation (24) has a lower thermal conductivity compared to a gas located in the gap (10) and/or an insulation arranged in the gap.

6. Kitchen utensil (2) according to any of the preceding claims, wherein the coupling device (26) comprises at least one ferrite piece (26a; 26a, 26b).

7. Kitchen utensil (2) according to any of the preceding claims, wherein the coupling device (26) has at least one ferrite ring and/or a plurality of annularly arranged ferrite pieces forming at least one ring, particularly preferably that the at least one ferrite ring and/or the at least one ring is arranged on the periphery and/or in the central region of the outer base (14).

8. Kitchen utensil (2) according to either of the two preceding claims, wherein an insulation (32) arranged in the gap (10) has the coupling device (26), wherein the insulation (32) comprises ferrite and an insulating material with a lower thermal conductivity compared to ferrite.

9. Kitchen utensil (2) according to the preceding claim, wherein the insulating material of the insulation has at least one recess for an arrangement of the ferrite in the insulating material, and/or that the ferrite and the insulating material are formed as a mixture forming the insulation (32).

10. Kitchen utensil (2) according to any of the preceding claims, wherein at least one spacer (28) is arranged on the side of the outer shell (12) that faces the induction hob (4) in the placement position, such that an air gap (30) is produced between the induction hob (4) and the outer shell (12) when the kitchen utensil (2) is in the placement position.

11. Kitchen utensil (2) according to the preceding claim, wherein the spacer (28) is at least partially made of ferrite, preferably that the spacer (28) is arranged on the outer base (14) of the outer shell (12).

## Revendications

1. Ustensile de cuisine (2) destiné à être posé sur une plaque de cuisson à induction (4), comprenant une coque intérieure (6) comportant un fond intérieur (8),
une coque extérieure (12) espacée de la coque intérieure (6) par un espace intermédiaire (10) et comportant un fond extérieur (14), et
un dispositif de chauffage (16) par induction disposé entre le fond intérieur (8) et le fond extérieur (14), à distance de la coque extérieure (12),
dans lequel le dispositif de chauffage (16) présente une couche de distribution de chaleur (18) reliée de manière conductrice de chaleur au fond intérieur (8) et une couche génératrice de chaleur (20) qui est disposée de manière conductrice de chaleur sur la couche de distribution de chaleur (18) sur le côté de la couche de distribution de chaleur (18) opposé au fond intérieur (8) et qui est espacée du fond extérieur (14), et
dans lequel la couche génératrice de chaleur (20) peut être couplée par induction directement et/ou indirectement à une bobine d'induction de la plaque de cuisson à induction (4) au niveau d'une position de pose de l'ustensile de cuisine (2) sur la plaque de cuisson à induction (4),
**caractérisé en ce que**
la couche génératrice de chaleur (20) est réalisée sous forme d'au moins un plateau dont la zone de bord fait saillie au moins dans certaines sections, de préférence entièrement, en direction du fond extérieur (14) de telle sorte qu'une distance entre la couche génératrice de chaleur (20) et le fond extérieur (14) est plus faible dans la zone de la périphérie du fond extérieur (14) que par rapport à un reste de la couche génératrice de chaleur (20).

2. Ustensile de cuisine (2) selon la revendication 1, dans lequel un dispositif de couplage (26) est disposé entre la couche génératrice de chaleur (20) et la coque extérieure (12) pour le couplage par induction de la couche génératrice de chaleur (20) à la bobine d'induction de la plaque de cuisson à induction (4).

3. Ustensile de cuisine (2) selon l'une des revendications précédentes, **caractérisé en ce qu'**au moins l'un des au moins un plateau est réalisé de telle sorte que ledit plateau fait en outre saillie dans une zone centrale du fond extérieur (14) en direction du fond extérieur (14), de sorte qu'une distance entre la couche génératrice de chaleur (20) et le fond extérieur (14) est réduite dans la zone de la périphérie du fond extérieur (14) et dans la zone centrale du fond extérieur (14) par rapport au reste de la couche génératrice de chaleur (20).

4. Ustensile de cuisine (2) selon l'une des revendications précédentes, dans lequel la distance entre la couche génératrice de chaleur (20) et le fond extérieur (14) est supérieure à 3 millimètres dans la zone de la périphérie du fond extérieur (14) et/ou dans la zone centrale du fond extérieur (14), en particulier est supérieure à l'épaisseur de matériau de la couche génératrice de chaleur (20).

5. Ustensile de cuisine (2) selon l'une des revendications précédentes, dans lequel le plateau est entouré d'un isolant spécial (24) dans la zone de la périphérie du fond extérieur (14) et/ou dans la zone centrale du fond extérieur, dans lequel l'isolant spécial (24) présente une conductivité thermique inférieure par rapport à celle d'un gaz présent dans l'espace intermédiaire (10) et/ou celle d'un isolant disposé dans l'espace intermédiaire.

6. Ustensile de cuisine (2) selon l'une des revendications précédentes, dans lequel le dispositif de couplage (26) comprend au moins une pièce de ferrite (26a ; 26a, 26b).

7. Ustensile de cuisine (2) selon l'une des revendications précédentes, dans lequel le dispositif de couplage (26) présente au moins un anneau de ferrite et/ou une pluralité de pièces de ferrite disposées en forme d'anneau formant au moins un anneau, de manière particulièrement préférée de sorte que l'au moins un anneau de ferrite et/ou l'au moins un anneau est disposé à la périphérie et/ou dans la zone centrale du fond extérieur (14).

8. Ustensile de cuisine (2) selon l'une des deux revendications précédentes, dans lequel un isolant (32) disposé dans l'espace intermédiaire (10) présente le dispositif de couplage (26), dans lequel l'isolant (32) comprend de la ferrite et un matériau isolant avec une conductivité thermique inférieure par rapport à celle de la ferrite.

9. Ustensile de cuisine (2) selon la revendication précédente, dans lequel le matériau isolant de l'isolant présente au moins un évidement pour une disposition de la ferrite dans le matériau isolant et/ou de sorte que la ferrite et le matériau isolant sont réalisés sous forme d'un mélange formant l'isolant (32).

10. Ustensile de cuisine (2) selon l'une des revendications précédentes, dans lequel au moins un espaceur (28) est disposé sur le côté de la coque extérieure (12) qui est tourné vers la plaque de cuisson à induction (4) dans la position de pose de telle sorte qu'en résulte un entrefer (30) entre la plaque de cuisson à induction (4) et la coque extérieure (12) lorsque l'ustensile de cuisine (2) est en position de pose.

11. Ustensile de cuisine (2) selon la revendication précédente, dans lequel l'espaceur (28) est réalisé au moins partiellement en ferrite, de préférence de sorte que l'espaceur (28) est disposé sur le fond extérieur (14) de la coque extérieure (12).
